# EUROPEAN PATENT APPLICATION

(11) **EP 2 061 168 A1**
(43) Date of publication of application: **20.05.2009**
(21) Application number: 08169117.2
(22) Date of filing: 14.11.2008
(51) Int. Cl.: H04H 20/95, H04H 60/73, H04N 7/24

(54) **Method, device, and system for transmitting initialization data file of notification service**

(30) Priority: 16.11.2007 CN 200710187127; 06.03.2008 CN 200810083540
(71) Applicant: Huawei Technologies Co., Ltd., Longgang District, Shenzhen Guangdong 518129 (CN)
(72) Inventor: Yue, Peiyu, Guangdong 518129 (CN); Shi, Teng, Guangdong 518129 (CN); Chen, Li, Guangdong 518129 (CN)
(74) Representative: Körber, Martin Hans

(57) **Abstract**

A method, a device, and a system for transmitting initialization data file of a notification service are provided. The method includes steps of encapsulating at least one initialization data file of a notification service in an initialization container; carrying an ID of the initialization container in a service acquisition fragment of an electronic service guide (ESG); and sending the ESG and the initialization container, and providing at leaset one data type for each initialization data file. The device is a communication device. The system is a communication system. Meanwhile, a method for initializing a notification application is also provided. Therefore, the initialization manner of a notification service is expanded, thereby realizing the distribution and acquisition of configuration files required by the notification service.

## Description

The present application claims the benefit of Chinese patent application No. 200810083540.5, filed on March 6, 2008 to China patent office and entitled "METHOD, DEVICE, AND SYSTEM FOR TRANSMITTING INITIALIZATION DATA FILE OF NOTIFICATION SERVICE", and Chinese patent application No. 200710187127.9 filed on November 16, 2007 to China patent office and entitled "METHOD, DEVICE, AND SYSTEM FOR TRANSMITTING INITIALIZATION DATA FILE OF NOTIFICATION SERVICE".

### FIELD OF THE INVENTION

The present invention relates to the communication technology field, and more particularly to a method, a device, and a system for transmitting initialization data file of a notification service.

### BACKGROUND

In a mobile broadcasting system, the broadcast network may need to provide subscribers or terminal equipments about forthcoming events by transmitting notification messages, which are so-called notification service. The subscribers or terminal equipments receive the notification messages can present them or carry out corresponding processing operations. The notification events include emergency event, system-related notification (e.g., a certain function failure of the system), program-related notification (e.g., information about program performers), software update availability, and so on.

Currently, the notification services fall into the following two categories:

1. Default notification services: The default notification service is independent from specific services, and generally adapted to send some unexpected messages, such as a system failure notification and an unexpected disaster event notification.

Generally, the default notification service is further classified into a platform dependent notification (PDN), an electronic service guide (ESG) dependent notification (EDN), and a network dependent notification (NDN).

2. User selected notification (USN) service: The USN service is further classified into a service-related notification service and a stand alone notification services.

The service-related notification is relevant to specific services, for example, sending an award-winning question to subscribers which are watching a certain critical scenario of a program, or a program forecast message of a certain service, and so on.

The stand alone notification service, irrelevant to specific services, may serve as an independent service to be selectively subscribed by the subscriber, which may require an additional fee and need to be encrypted such as charged weather forecast information.

The terminal equipment finds and receives all the default notification service according to signaling in a so-called default-notification-access descriptor. The subscriber may subscribe to a user selected notification service according to the description in the ESG, and retrieve the notification messages accordingly. For user selected notification service, the terminal equipment may firstly filter the messages by the user interests, user group and so on, and then processes the messages accordingly.

The filter mechanism of the notification service includes adding a filter parameter to a message header of the notification service and delivering a filter table (for defining meanings of various filter information) to the terminal equipment through the ESG or an interactive channel. Accordingly, the terminal equipment filters the filter parameter in the message header according to the definition of the filter information selected from the filter table, and receives the filtered message.

In the prior art, a filter table ID is placed in a service acquisition fragment, for notifying the terminal equipment about a specific filter table that is employed by the notification service. The terminal equipment acquires the corresponding filter table according to the filter table ID, filters the filter parameter of the message in the message header according to the definition of the filter parameter ID in the filter table and the value of the filter parameter selected by the terminal equipment or the subscriber, and acquires the notification service when the value of the filter parameter in the filter table is consistent with the value of the filter parameter of the message.

The data structure of the filter table is as follows:
ID: filter type identifier;
length: length of the filter type value;
data type: type of data; and
semantic meaning: semantic meaning of the filter type.

The filter table, as an independent file, is transmitted to the terminal equipment.

The format of the filter parameter in the notification service is as follows:
ID: filter type identifier;
length: length of the filter type value; and
value: value of the filter parameter.

The filter parameter is added in the notification messages and transmitted to the terminal equipment.

The filter table corresponding to the service-related notification service is acquired through filterTableRef in the NotificationComponentType of a service acquisition fragment, in which a specific example of the service acquisition fragment is as follows:

```
    <Acquisition acquistionId="dvbipdc://example.com/222"
 contentMimeType="video/h264">
         <ComponentDescription>
              <ComponentCharacteristics xsiaype="VideoComponentType">//Video
                   <Bandwidth> 12800<Bandwidth>
              </ComponentCharcterstics>
              <ComponentCharacteristic xsi:type="AudioComponentType">//Audio
                   <Bandwidth>32000</Bandwidth>
                   <Language>eng</Language>
              </ComponentCharacteristic>
              <ComponentCharacteristic
 xsi:type="NotificationComponentType">//Notification service
 
    <filterTableRef>dvbipdc://example.com/NotifTable222.xml</filterTableRef>//Filter
 table of the notification service
              </ComponentCharacteristic>
              <SessionDescription>
                   <SDPStream/>
                   <SDPURI>dvbipdc://example.com/286.SDP</SDPURI>
              </SessionDescription>
    </Acquisition>
    A specific example of the NotificationComponentType is as follows:
    <complexType name="NotificationComponentType">
              <complexContent>
                   <extension base="esg:ComponentCharacteristicType">
                        <sequence>
                             <element name="filterTableRef" type="anyURI"
 minOccurs="0"/>
                        </sequence>
                        <attribute name="isOobPayload" type="boolean"
 use="optional"/>
                   </extension>
              </complexContent>
    </complexType>
```

The filterTableRef is a filter table corresponding to the notification service.

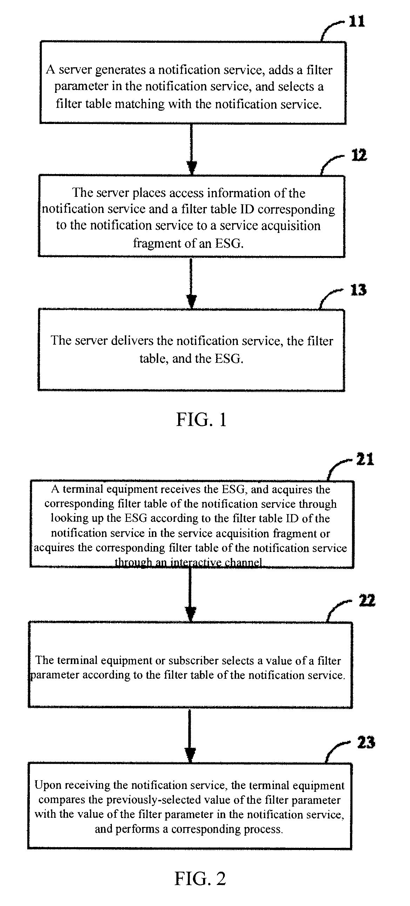

Referring to Figure 1, a processing flow for a server to process a notification message is described as follows.

In Step 11, a server generates a notification message, adds a filter parameter in the notification message, and selects a filter table matching with the notification service.

In Step 12, the server places access information of the notification service and a filter table ID corresponding to the notification service to a service acquisition fragment of an ESG.

In Step 13, the server delivers the notification messages, the filter table, and the ESG.

Referring to Figure 2, a processing flow for a terminal equipment to process a notification service is described as follows.

In Step 21, the terminal equipment receives the ESG, and acquires the corresponding filter table of the notification service by looking up the ESG according to the filter table ID of the notification service in the service acquisition fragment or acquires the corresponding filter table of the notification service through an interactive channel.

In Step 22, the terminal equipment or subscriber selects a value of a filter parameter according to the filter table definition of the notification service.

In Step 23, upon receiving a notification message, the terminal equipment compares the previously-selected value of the filter parameter with the value of the filter parameter in the notification message header, and if the two values are consistent, the terminal equipment performs a corresponding process such as presenting the corresponding content.

The inventor(s) finds out the following defects of the prior art during the implementation of the present invention.

1. In the prior art, the filter table ID (FilterTableRef) of the notification service is placed in the service acquisition fragment of the ESG, and the service acquisition fragment is used to describe the filter parameter.

One possible circumstance is that, several types of initialization data, not limited to the filter table, may be needed for terminal to initialize the notification application before processing a notification message. The possible initialization data may involve by not limited, a table configuration file (such as a background pattern and a background color) when presenting the notification message and a lifecycle configuration file (such as default durations of the Lifetime and Active time) of the notification message. The current data structure, only supporting filtering table, has an explicitly poor expansibility,

There are still other possible demands such as adding an initialization characteristic about changing the skin of the notification service, or adding an initialization characteristic about the default Lifetime and Active time of the notification service.

2. The prior art is only applicable to the USN service which can be described in ESG, while it is not applicable to the default notification service since there is no ESG and therefore no acquisition fragment to signal the location of initialization data.

### SUMMARY

Accordingly, the embodiments of the present invention are directed to a method, a device, and a system for transmitting initialization data file of a notification service in embodiments, so as to expand an initialization manner of the notification service, and realize distribution and acquisition of a configuration file required by the notification service.

In an embodiment of the present invention, a method for transmitting initialization data file of a notification service is provided. The method includes the following steps: encapsulating at least one initialization data file of a notification service in an initialization container; carrying an identifier (ID) of the initialization container in a service acquisition fragment of an electronic service guide (ESG); and sending the ESG and the initialization container, and providing a data type for each initialization data file.

In an embodiment of the present invention, a method for initializing a notification application is provided. The method includes the following steps: acquiring an ESG, in which a service acquisition fragment of the ESG carries an ID of an initialization container; acquiring the initialization container according to the ID thereof; extracting at least one initialization data file of the notification service from the initialization container; acquiring a data type for each initialization data file; and initializing the notification application according to the initialization data file(s) and the data type(s).

In an embodiment of the present invention, a method for transmitting initialization data file of a notification service is provided. The method includes the following steps: encapsulating at least one initialization data file of a notification service in an initialization container; carrying an ID of the initialization container in a default-notification-default-notification-access descriptor; and sending the default-notification-access descriptor and the initialization container, and providing a data type for each initialization data file.

In an embodiment of the present invention, a method for initializing a notification application is provided. The method includes the following steps: acquiring an default-notification-access descriptor, in which the access descriptor carries an ID of an initialization container; acquiring the initialization container according to the ID thereof; extracting at least one initialization data file of the notification service from the initialization container; acquiring a data type for each initialization data file; and initializing the notification application according to the initialization data file(s) and the data type(s).

In an embodiment of the present invention, a communication device is provided, which includes an initialization container processing module, an ESG processing module, and a sending module. The initialization container processing module is adapted to encapsulate at least one initialization data file of a notification service in an initialization container. The ESG processing module is adapted to carry an ID of the initialization container in a service acquisition fragment of the ESG. The sending module is adapted to send the ESG and the initialization container, and provide a data type for each initialization data file.

In an embodiment of the present invention, a communication device is provided, which includes a first acquisition module, a second acquisition module, an extraction module, a third acquisition module, and an initialization module. The first acquisition module is adapted to acquire an ESG, in which a service acquisition fragment of the ESG carries an ID of an initialization container. The second acquisition module is adapted to acquire the initialization container according to the ID thereof. The extraction module is adapted to extract at least one initialization data file of a notification service from the initialization container. The third acquisition module is adapted to acquire a data type for each initialization data file. The initialization module is adapted to initialize the notification application according to the initialization data file(s) and the data type(s).

In an embodiment of the present invention, a communication device is provided, which includes an initialization container processing module, an ESG processing module, and a sending module. The initialization container processing module is adapted to encapsulate at least one initialization data file of a notification service in an initialization container. The ESG processing module is adapted to carry an ID of the initialization container in a default-notification-access descriptor. The sending module is adapted to send the access descriptor and the initialization container, and provide a data type for each initialization data file.

In an embodiment of the present invention, a communication device is provided, which includes a first acquisition module, a second acquisition module, an extraction module, a third acquisition module, and an initialization module. The first acquisition module is adapted to acquire a default-notification-access descriptor, in which the access descriptor carries an ID of an initialization container. The second acquisition module is adapted to acquire the initialization container according to the ID thereof. The extraction module is adapted to extract at least one initialization data file of a notification service from the initialization container. The third acquisition module is adapted to acquire a data type for each initialization data file. The initialization module is adapted to initialize the notification application according to the initialization data file(s) and the data type(s).

In an embodiment of the present invention, a communication system is provided, which includes a server and a terminal equipment. The server is adapted to encapsulate at least one initialization data file of a notification service in an initialization container, carry an ID of the initialization container in a service acquisition fragment of an ESG, send the ESG and the initialization container, and provide a data type for each initialization data file. The terminal equipment is adapted to acquire the ESG, acquire the initialization container according to the ID thereof, extract the at least one initialization data file from the initialization container, acquire the data type for each initialization data file, and initialize the notification application according to the initialization data file(s) and the data type(s).

In an embodiment of the present invention, a communication system is provided, which includes a server and a terminal equipment. The server is adapted to encapsulate at least one initialization data file of a notification service in an initialization container, carry an ID of the initialization container in a default-notification-access descriptor, send the default-notification-access descriptor and the initialization container, and provide a data type for each initialization data file. The terminal equipment is adapted to acquire the default-notification-access descriptor, acquire the initialization container according to the ID thereof, extract at least one initialization data file from the initialization container, acquire the data type for each initialization data file, and initialize the notification application according to the initialization data file(s) and the data type(s).

In the embodiments of the present invention, at least one initialization data file of a notification service is encapsulated in an initialization container, an ID of the initialization container is carried in a service acquisition fragment of an ESG, the ESG and the initialization container are sent, and a data type for each initialization data file is provided. Accordingly, once having received the ESG and the initialization container, a subsequent terminal equipment acquires the initialization data file(s) and the data type(s) thereof and then initializes the notification application, so as to expand the initialization manner of the notification service. The initialization manner may be diversified and not limited to filtering table of a notification service.

In the embodiments of the present invention, at least one initialization data file of a notification service is encapsulated in an initialization container; an ID of the initialization container is carried in a default-notification-access descriptor; the default-notification-access descriptor and the initialization container are sent, and a data type for each initialization data file is provided. Accordingly, once receiving the default-notification-access descriptor and the initialization container, the terminal equipment acquires the initialization data file(s) and the data type(s) thereof and then initializes the notification application, so as to expand the initialization manner of the notification service. The initialization manner may be diversified and not limited to filtering table of the notification service. Moreover, the distribution and acquisition of the configuration file required by the notification service are further realized.

### BRIEF DESCRIPTION OF THE DRAWINGS

Figure 1 is a processing flow chart for a server to process a notification service in the prior art;

Figure 2 is a processing flow chart for a terminal equipment to process a notification service in the prior art;

Figure 3 is a processing flow chart for transmitting initialization data file of a notification service according to an embodiment of the present invention;

Figure 4 is a processing flow chart for initializing a notification service according to an embodiment of the present invention;

Figure 5 is a processing flow chart for transmitting initialization data file of a notification service according to another embodiment of the present invention;

Figure 6 is a processing flow chart for initializing a notification service according to another embodiment of the present invention;

Figure 7 is a schematic structural view of a communication device according to an embodiment of the present invention;

Figure 8 is a schematic structural view of a communication device according to another embodiment of the present invention; and

Figure 9 is a schematic structural view of a communication system according to an embodiment of the present invention.

### DETAILED DESCRIPTION

The embodiments of the present invention are illustrated in detail below with reference to the accompanying drawings.

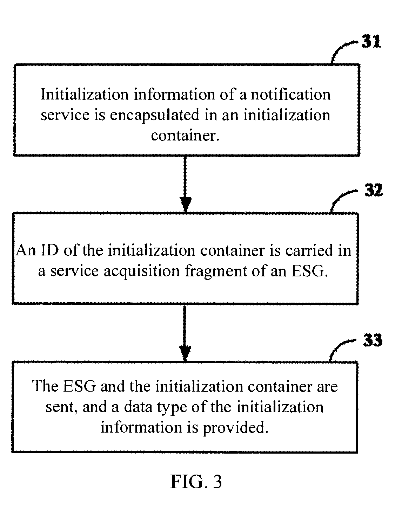

Referring to Figure 3, a processing flow for transmitting initialization data file of a notification service in an embodiment is described as follows.

In Step 31, initialization data file of a notification service is encapsulated in an initialization container.

In Step 32, an ID of the initialization container is carried in a service acquisition fragment of an electronic service guide (ESG).

In Step 33, the ESG and the initialization container are sent, and a data type of the initialization data file is provided.

The initialization container may be a multipart initialization container or a binary initialization container. The multipart initialization container includes a header field, an index, and data.

The header field may contain an ID of an initialization container, a version number of a specification followed by the initialization container, and a container version number.

The index is formed by initialization documents (NotificationInitDocmnt) of one or more notification services. The initialization document (NotificationInitDocmnt) of a notification service includes one selected from a group consisting of position information, content-ID, content-type of the initialization data file, document-ID, version number, and content-description of the initialization document, or any combination thereof.

In an embodiment, the initialization document in the index further includes a data type (dataType) of the initialization data file, for indicating the data type of the initialization data file. The initialization data file encapsulated in the initialization container includes one selected from a group consisting of a filter table, a notification skin table, a lifecycle configuration file of the notification service, and a notification message type table, or any combination thereof.

The data is the initialization data file of the notification service.

The initialization container may further include a valid time for indicating a time period when a terminal switches to use the initialization container. After receiving an initialization container with the valid time, once the valid time is elapsed, the terminal switches to use the new initialization container. The valid time may be an absolute time for indicating to switch at a certain time point or may be a relative time for indicating to switch after a certain time period.

The data structure of a binary initialization container is shown in Table 1.

**Table 1 Data structure of binary container**

| Name | Type | Collection | Description | Optional (O)/Mandatory (M) |
|---|---|---|---|---|
| container | E | | Initialization container of a | |
| | | | notification service, | |
| | | | containing elements of: | |
| | | | container_header | |
| | | | Document | |
| container_header | E1 | 1 | Initialization container index of | M |
| | | | a notification service, | |
| | | | containing an element of: | |
| | | | Index; | |
| | | | containing an attribute of: | |
| | | | num structures | |
| num_structures | A | 1 | Number of initialization | M |
| | | | documents | |
| Valid from | A | 1 | Valid time of the initialization | M |
| | | | container | |
| Index | E2 | 1..N | Index of the initialization | M |
| | | | document, | |
| | | | containing attributes of: | |
| | | | DocumentID | |
| | | | Version | |
| | | | DataType | |
| | | | structure_ptr | |
| | | | structure length | |
| DocumentID | A | 0..1 | ID of the initialization | O |
| | | | document | |
| Version | A | 0..1 | Version of the initialization | O |
| | | | document | |
| dataType | A | 1 | Type of the initialization | M |
| | | | document | |
| structure_ptr | A | 0..1 | Starting position of the | O |
| | | | initialization document | |
| structure_length | A | 0..1 | Length of the initialization | O |
| | | | document | |
| Document | E1 | 1..N | Initialization document | M |

As seen from the above, the binary initialization container also includes an index and data. The index may include DataType (data type of the initialization data file), structure_ptr (adapted to identify the position information of the initialization data file of the notification service in the container), structure_length (adapted to identify the length of the data), as well as Document I D (serial number of the initialization document) and Version (version number of the initialization document). The index may also include the ID and the type of the initialization data file, the name and the description data file of the initialization document.

DataType indicates the data type of the initialization data file, and the definitions of the values thereof are shown in Table 2.

**Table 2 Definitions of values of the data type**

| Value | Definition |
|---|---|
| 0 | Reserved |
| 1 | Filter table of a notification service |
| 2 | Notification skin table of a notification service |
| 3 | Default time set of the notification message lifecycle |
| 4∼ | Reserved for expansion |

A specific example of the initialization container (e.g., a multipart initialization container) is shown as follows:

```
         <?xml version="1.0" encoding="UTF-8"?>
    <xs:schema xmlns:xs="http://www.w3.org/2001/XMLSchema"
                  xm1ns:f1="dvb:ipdc:2007:notification"
                  elementFormDefault:xs="qualified"
                  targetNamespace:xs=" dvb:ipdc:2007:notification ">
 
      <xs:element name="NotificationInitDocumentIndex"> //Index of an initialization
 container of a notification service
         <xs :complexType>
            <xs:sequence>
              <xs:element name="NotifInitDocmnt" type="NotifInitDocmntType"/>
              <xs:any namespace="##any" processContents="lax"/>
           </xs:sequence>
           <xs:attribute name="Valid From" type="xs:datetime" use="required"/>
           <xs:any Attribute namespace="##any" processContents="lax"/>
         </xs:complexType>
       </xs:element>
 
       <xs:complexType name=" NotifInitDocmntType ">
         <xs:attribute name="DocumentID" type="xs:unsignedInt" use="optional"/>
 //ID of the initialization document of the notification service
         <xs:attribute name="Version" type="xs:unsignedByte" use="optional" //Version
 of the initialization document of the notification service
         <xs:attribute name="dataType" type="xs:unsignedByte" use="optional" //Data
 type
         <xs:attribute name="Content-ID" type="xs:anyURI" use="required"/>
         <xs:attribute name="Content-Type" type="xs:string" use="optional"/>
         <xs:attribute name="Content-Description" type="xs:string" use="optional"/>
         <xs:anyAttribute namespace="##any" processContents="lax"/>
      </xs:complexType>
 
    </xs:schema>
```

The parameter DataType (data type) is a newly added parameter for distinguishing other content in the initialization container, and the value thereof may be "FilterTable", "NotificationSkin" and the like.

A specific example of the index of the initialization container is shown as follows:

```
<Index xm1ns:xs="http://www.w3.org/2001/XMLSchema"
                 xm1ns:f1="dvb:ipdc:2007:notification"
                 elementFormDefault:xs="qualified"
 
       < NotificationInitDocumentIndex>
           <NotifInitDocmnt>
              <DocumentID= »Notification Init document 1 »/> //ID of the
 initialization document of the notification service
              <Version= »1»/> //Version of the initialization document of the
 notification service
              <DataType= »FilterTable »/> //Data type of the initialization document
 of the notification service
              <Content-ID= »FilterTable 1 »/>
              <Content-Type= » application/vnd.dvb.notification.filtertable+xml »/>
           </NotiflnitDocmnt>
           <NotiflnitDocmnt>
              <DocumentID= »Notification Init document 2 »/>
              <Version= »1 »/>
              <DataType= »NotificationSkin »/>
              <Content-ID= »NotificationSkin1 »/>
              <Content-Type= » application/
 application/vnd.dvb.notification.skin+xml »/>
           </NotifInitDocmnt>
      </NotificationInitDocumentIndex >
    A specific example of the initialization container is shown as follows:
    MIME-Version: 1.0
    Content-type: multipart/related;
                   boundary="boundary"
                   start=<Index>
    --boundary
    Content-type: application/vnd.dvb.notification.index +xml
    Content-Description: Notification Init Container Index //Index of the initialization
 container of the notification service
    Content-ID: <Index>
```

[Index data] --boundary

```
Content-type: application/vnd.dvb.notification.filtertable+xml
    Content-Description: Notification Filter Table //Initialization document of the
 notification service - filter table
    Content-ID: <NotificationFilterTable 1>
```

[Filter Table 1 data] --boundary

```
    Content-Type: application/vnd.dvb.notification.skin
    Content-Description: Notification skin ////Initialization document of the notification
 service - notification skin table
    Content-ID: <NotificationSkin1>
```

[Skin data] --boundary--

In practice, the initialization container may be sent through an ESG session, a notification session, or an independent session. Herein, the session may be a file delivery over unidirectional transport (FLUTE) session corresponding to the notification service or a real-time transport protocol (RTP) session.

In the above embodiment, the data type of the initialization data file is encapsulated in the index of the initialization container, so that the data type is provided by sending the initialization container.

In another embodiment, the data type of the initialization data file is carried in the ESG, so that the data type is provided by sending the ESG. In this case, the initialization container may be a container merely containing data or a container containing both an index and data, but the index does not contain the data type of the initialization data file.

In practice, the ID of the initialization container and the data type of the initialization data file are carried in a service acquisition fragment of the ESG. For example, when the initialization container does not contain the parameter of DataType, in order to identify the data type of the initialization data file of the notification service, the ID of the initialization container corresponding to the notification message and the parameter of DataType of the initialization data file are carried in the Notification Component in the ComponentDescription of the service acquisition fragment. The specific definitions of the parameters are shown in Table 3.

**Table 3 Definitions of parameters of the service acquisition fragment**

| Name | Type | Collection | Description | Optional (O)/Mandatory (M) |
|---|---|---|---|---|
| NotificationComponentType | E | | Type of notification message component, expanding based on: | |
| | | | ComponentCharacteristicType; containing elements of: | |
| | | | InitContainerRef DataType | |
| ComponentCharacteristicType | E1 | 1 | Type of component characteristic, containing an element of: | M |
| | | | Bandwidth; containing an attribute of: | |
| | | | Purpose | |
| Bandwidth | E2 | 0...N | Bandwidth | O |
| Purpose | A1 | 0...1 | Serving as a notification message, which is optional | O |
| InitContainerRef | E1 | 0...N | Reference for an initialization container of a notification message | O |
| DataType | E1 | 0...N | Data type of the initialization container of the notification message | O |

A specific example of the service acquisition fragment including the ID of the initialization container and the parameter DataType of the initialization data file is shown as follows:

```
    <Acquisition acquistionId="dvbipdc://example.com/222"
 contentMimeType="video/h264">
         <ComponentDescription>
              <ComponentCharacteristics xsi:type="VideoComponentType">
                   <Bandwidth> 12800</Bandwidth>
              </ComponentCharcterstics>
              <ComponentCharacteristic xsi:type="AudioComponentType">
                   <Bandwidth>32000</Bandwidth>
                   <Language>eng</Language>
              </ComponentCharacteristic>
              <ComponentCharacteristic xsi:type="NotificationComponentType">
 //In-band notification service
                   <InitContainerRef>dvbipdc://example.com/NotifContainer222.xml</
 InitContainerRef> //ID of the initialization container of the notification service
              <DataType>FliterTable</ DataType> //Data type of the initialization
 container of the notification service
              </ComponentCharacteristic>
              <SessionDescription>
                   <SDPStream/>
                   <SDPURI>dvbipdc://example.com/286.SDP</SDPURI>
              </SessionDescription>
         </ComponentDescription>
         <ComponentDescription>
              <ComponentCharacteristic xsi:type="NotificationComponentType"
 isOobPayload="true"> //Out-band notification service
              <InitContainerRef>dvbipdc://example.com/NotifContainer222.xm1<
 InitContainerRef> //ID of the initialization container of the notification service
              <DataType>FliterTable</ DataType> //Data type of the initialization
 container of the notification service
              </ComponentCharacteristic>
              <SessionDescription xsi:type="SDPRefType">
                   <SDPStream/>
                   <SDPURI>dvbipdc://example.com/287.SDP</SDPURI>
              </SessionDescription>
         </ComponentDescription>
    </Acquisition>
```

In the above example, the service acquisition fragment includes both the in-band notification message (the first NotificationComponentType element) and the out-band notification message (the second NotificationComponentType element). The ID of the initialization container and the data type of the initialization data file can be known from the above service acquisition fragment, and the terminal equipment may initialize the corresponding notification service according to the initialization data file and the data type thereof.

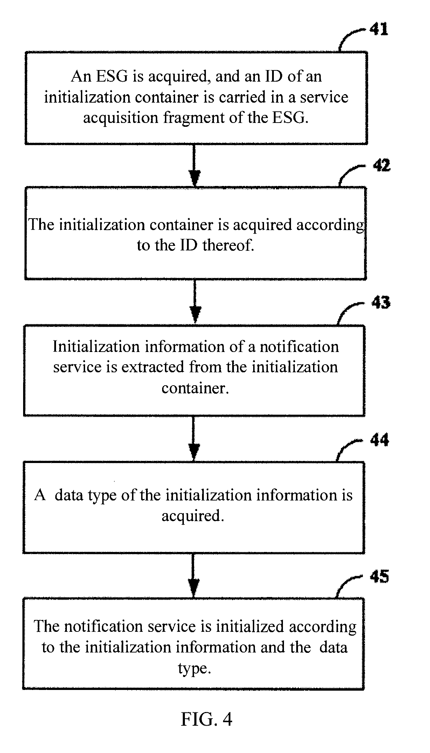

Referring to Figure 4, a processing flow for initializing a notification service in an embodiment is described as follows.

In Step 41, an ESG is acquired, and an ID of an initialization container is carried in a service acquisition fragment of the ESG.

In Step 42, the initialization container is acquired according to the ID thereof.

In Step 43, initialization data file of a notification service is extracted from the initialization container.

In Step 44, a data type of the initialization data file is acquired.

In Step 45, the notification service is initialized according to the initialization data file and the data type.

In an embodiment, the data type of the initialization data file is encapsulated in an index of the initialization container, and the data type is acquired through extracting the data type from the index of the initialization container. In another embodiment, the data type of the initialization data file is carried in the ESG, and the data type is acquired through extracting the data type from the ESG. The initialization container may be acquired through an ESG session, a notification session, or an independent session.

When the initialization data file is a filter table (FilterTable) of the notification service, the process of initializing the corresponding notification service according to the initialization data file and the data type includes acquiring the filter table and setting a value of a filter parameter according to the filter table. When the initialization data file is a notification skin table (NotificationSkin) of the notification service, the process of initializing the corresponding notification service according to the initialization data file and the data type includes acquiring the notification skin table and setting a presenting manner according to the notification skin table. When the initialization data file is a lifecycle configuration file (DefaultTimer) of the notification service, the process of initializing the corresponding notification service according to the initialization data file and the data type includes acquiring the lifecycle configuration file and setting a lifecycle parameter of the notification service according to the lifecycle configuration file. When the initialization data file is a notification message type table, the process of initializing the corresponding notification service according to the initialization data file and the data type includes acquiring the notification message type table and selectively setting a value of the notification message type.

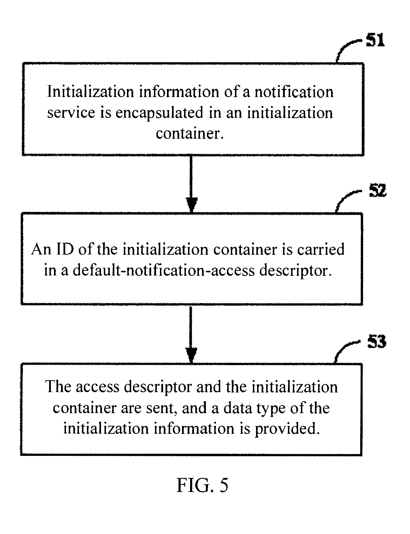

Referring to Figure 5, a processing flow for transmitting initialization data file of a notification service in an embodiment is described as follows.

In Step 51, initialization data file of a notification service is encapsulated in an initialization container.

In Step 52, an ID of the initialization container is carried in a default-notification-access descriptor.

In Step 53, the access descriptor and the initialization container are sent, and a data type of the initialization data file is provided.

The initialization container includes an index and data. In an embodiment, the data type is encapsulated in the index of the initialization container, so that the data type is provided by sending the initialization container. The index further includes one selected from a group consisting of position information, a content ID, a content type of the initialization data file, a document ID, a version number, and a content description of the initialization document, or any combination thereof.

The access descriptor of the default notification service carries the ID of the initialization container, and the data structure of the access descriptor is shown in Table 4.

**Table 4 Access descriptor of default notification service**

| Name | Type | Collection | Description | Optional (O)/Mandatory (M) |
|---|---|---|---|---|
| DefaultNotificationAccessDescriptor | E | | Access descriptor of default notification service, | |
| | | | containing elements of: PDNEntry EDNEntry; | |
| | | | containing elements of: PDNFlag | |
| | | | n o EDNEntries | |
| PDNFlag | A | 1 | PDN service identifier | M |
| n_o_EDNEntries | A | 1 | umber of EDN services | M |
| PDNEntry | E1 | 0..N | Entry of the PDN | O |
| | | | service | |
| | | | containing an element of: | |
| | | | PDNInitContainerEntry | |
| PDNInitContainerID | E2 | 0..N | ID of the initialization container for the PDN service | O |
| EDNEntry | E1 | 0..N | Entry of the EDN service, | O |
| | | | containing an element of: | |
| | | | EDNInitContainerEntry | |
| EDNInitContainerID | E2 | 0..N | ID of the initialization container for the EDN service | O |

In another embodiment, the data type is carried in the access descriptor of the default notification service, so that the data type is provided by sending the access descriptor. The data structure of the access descriptor is shown in Table 6.

**Table 6 Access descriptor of default notification message**

| Name | Type | Collection | Description | Optional (O)/Mandatory (M) |
|---|---|---|---|---|
| DefaultNotificationAccessDescriptor | E | | Access descriptor of the default notification service, | |
| | | | containing elements of: PDNEntry EDNEntry; | |
| | | | containing elements of: PDNFlag | |
| | | | n_o_EDNEntries | |
| PDNFlag | A | 1 | PDN service identifier | M |
| n_o_EDNEntries | A | 1 | Number of EDN services | M |
| PDNEntry | E 1 | 0..N | Entry of the PDN service, | O |
| | | | containing an element of: | |
| | | | PDNInitContainerEntry | |
| PDNInitContainerID | E2 | 0..N | ID of an initialization container for the PDN service, containing an attribute of: | O |
| | | | DataType | |
| DataType | A | 0..1 | Data type of the initialization container for the PDN service | O |
| EDNEntry | E 1 | 0..N | Entry of the EDN service, | O |
| | | | containing an element of: | |
| | | | EDNInitContainerEntry | |
| EDNInitContainerID | E2 | 0..N | ID of an initialization container for the EDN service, | O |
| | | | containing an attribute of: | |
| | | | DataType | |
| DataType | A | 0..1 | Data type of the initialization container for the EDN service | O |

In practice, the initialization container may be sent through a bootstrap ESG flow or a default notification session. The session may be an FLUTE session corresponding to the notification service or an RTP session. The initialization data file includes one selected from a group consisting of a filter table, a lifecycle configuration file, a notification skin table of the notification service, and a notification message type table, or any combination thereof.

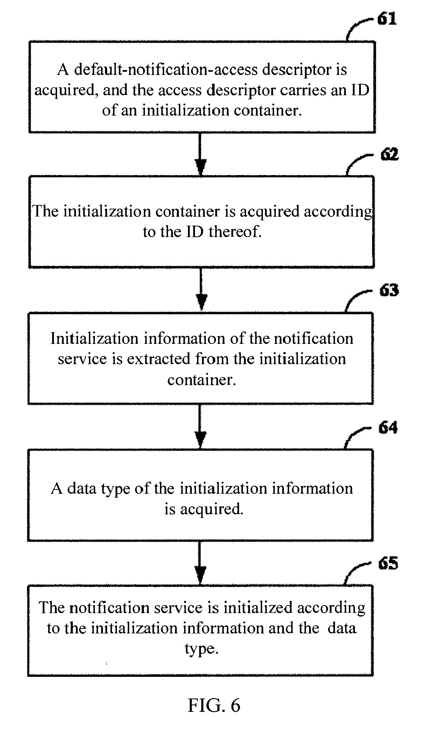

Referring to Figure 6, a processing flow for initializing a notification service in an embodiment is described as follows.

In Step 61, a default-notification-access descriptor is acquired, and the access descriptor carries an ID of an initialization container.

In Step 62, the initialization container is acquired according to the ID thereof.

In Step 63, initialization data file of the notification service is extracted from the initialization container.

In Step 64, a data type of the initialization data file is acquired.

In Step 65, the notification service is initialized according to the initialization data file and the data type.

In an embodiment, the data type of the initialization data file is encapsulated in an index of the initialization container, and the data type is acquired through extracting the data type from the index of the initialization container. In another embodiment, the data type of the initialization data file is carried in a default-notification-access descriptor, and the data type is acquired through extracting the data type from the access descriptor of the default notification service.

The index of the initialization container further includes one selected from a group consisting of position data file, a content ID, and a content type of the initialization data file, a document ID, a version number, and a content description of the initialization document, or any combination thereof.

The initialization container may be sent through a bootstrap ESG flow or a default notification session. The session may be an FLUTE session corresponding to the notification service or an RTP session.

When the initialization data file is a filter table (FilterTable) of the notification service, the process of initializing the corresponding notification service according to the initialization data file and the data type includes acquiring the filter table and setting a value of a filter parameter according to the filter table. When the initialization data file is a notification skin table (NotificationSkin) of the notification service, the process of initializing the corresponding notification service according to the initialization data file and the data type includes acquiring the notification skin table and setting a presenting manner according to the notification skin table. When the initialization data file is a lifecycle configuration file (DefaultTimer) of the notification service, the process of initializing the corresponding notification service according to the initialization data file and the data type includes acquiring the lifecycle configuration file and setting a lifecycle parameter of the notification service according to the lifecycle configuration file. When the initialization data file is a notification message type table, the process of initializing the corresponding notification service according to the initialization data file and the data type includes acquiring the notification message type table and selectively setting a value of the notification message type.

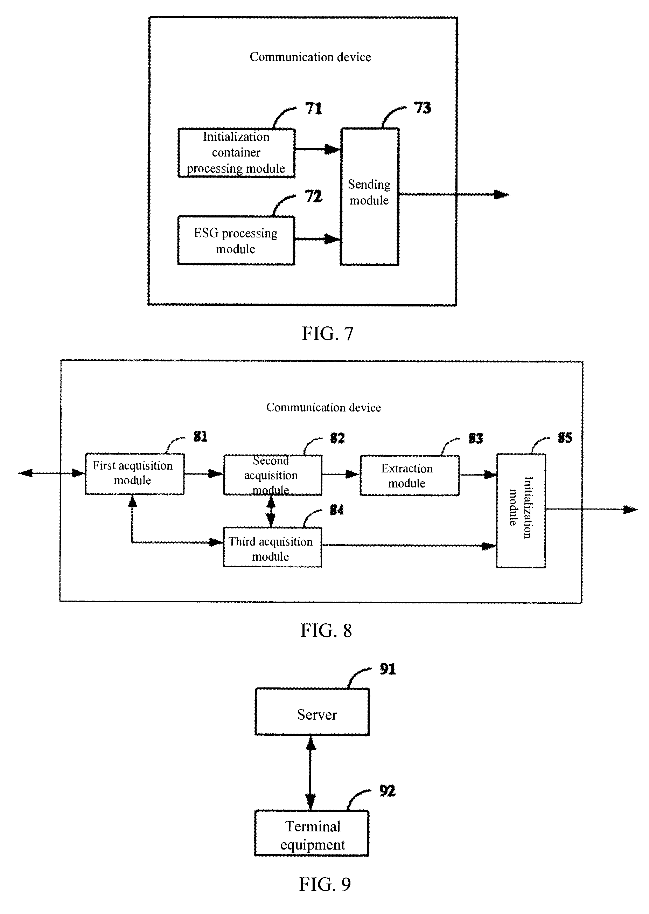

Based on the same inventive idea, a communication device is further provided in an embodiment of the present invention. Referring to Figure 7, the communication device includes an initialization container processing module 71, an ESG processing module 72, and a sending module 73. The initialization container processing module 71 is adapted to encapsulate initialization data file of a notification service in an initialization container. The ESG processing module 72 is adapted to carry an ID of the initialization container in a service acquisition fragment of the ESG. The sending module 73 is adapted to send the ESG and the initialization container, and provide a data type of the initialization data file.

In an embodiment, the initialization container includes an index and data. The initialization container processing module 71 is further adapted to encapsulate the data type in the index of the initialization container.

In an embodiment, the initialization container processing module 71 is further adapted to carry the data type in the ESG.

The sending module 73 is further adapted to send the initialization container through an ESG session, a notification session, or an independent session.

Based on the same inventive idea, a communication device is further provided in an embodiment of the present invention. Referring to Figure 8, the communication device includes a first acquisition module 81, a second acquisition module 82, an extraction module 83, a third acquisition module 84, and an initialization module 85. The first acquisition module 81 is adapted to acquire a default-notification-access descriptor, wherein the access descriptor carries an ID of an initialization container. The second acquisition module 82 is adapted to acquire the initialization container according to the ID thereof. The extraction module 83 is adapted to extract initialization data file of the notification service from the initialization container. The third acquisition module 84 is adapted to acquire a data type of the initialization data file. The initialization module 85 is adapted to initialize the notification service according to the initialization data file and the data type.

In an embodiment, the initialization container includes an index and data, and the data type is encapsulated in the index.

In an embodiment, the data type is carried in the ESG.

The second acquisition module 82 is further adapted to acquire the initialization container through an ESG session, a notification session, or an independent session.

When the initialization data file is a filter table of the notification service, the initialization module 85 is further adapted to acquire the filter table and set a value of a filter parameter according to the filter table. When the initialization data file is a notification skin table of the notification service, the initialization module 85 is further adapted to acquire the notification skin table and set a presenting manner according to the notification skin table. When the initialization data file is a lifecycle configuration file of the notification service, the initialization module 85 is further adapted to acquire the lifecycle configuration file and set a lifecycle parameter of the notification service according to the lifecycle configuration file. When the initialization data file is a notification message type table, the initialization module 85 is further adapted to acquire the notification message type table and selectively set a value of the notification message type.

Based on the same inventive idea, a communication device having the same structure as that shown in Figure 7 is provided in an embodiment of the present invention. In this embodiment, the initialization container processing module 71 is adapted to encapsulate initialization data file of a notification service in an initialization container. The ESG processing module 72 is adapted to carry an ID of the initialization container in a default-notification-access descriptor. The sending module 73 is adapted to send the access descriptor and the initialization container, and provide a data type of the initialization data file.

The initialization container includes an index and data. The initialization container processing module 71 is further adapted to encapsulate the data type in the index of the initialization container.

The initialization container processing module 71 is further adapted to carry the data type in the access descriptor.

The sending module 73 is further adapted to send the initialization container through a bootstrap ESG flow or a default notification session.

Based on the same inventive idea, a communication device having the same structure as that shown in Figure 8 is provided in an embodiment of the present invention. In this embodiment, the first acquisition module 81 is adapted to acquire a default-notification-access descriptor, in which the access descriptor carries an ID of an initialization container. The second acquisition module 82 is adapted to acquire the initialization container according to the ID thereof. The extraction module 83 is adapted to extract initialization data file of a notification service from the initialization container. The third acquisition module 84 is adapted to acquire a data type of the initialization data file. The initialization module 85 is adapted to initialize the notification service according to the initialization data file and the data type.

The initialization container includes an index and data, and the data type is encapsulated in the index.

The data type may also be carried in the access descriptor.

The second acquisition module 82 is further adapted to acquire the initialization container through a bootstrap ESG flow or a default notification session.

When the initialization data file is a filter table of the notification service, the initialization module 85 is further adapted to acquire the filter table and set a value of a filter parameter according to the filter table. When the initialization data file is a notification skin table of the notification service, the initialization module 85 is further adapted to acquire the notification skin table and set a presenting manner according to the notification skin table. When the initialization data file is a lifecycle configuration file of the notification service, the initialization module 85 is further adapted to acquire the lifecycle configuration file and set a lifecycle parameter of the notification service according to the lifecycle configuration file. When the initialization data file is a notification message type table, the initialization module 85 is further adapted to acquire the notification message type table and selectively set a value of the notification message type.

Based on the same inventive idea, a communication system is provided in an embodiment of the present invention. Referring to FIG. 9, the communication system includes a server 91 and a terminal equipment 92. The server 91 is adapted to encapsulate initialization data file of a notification service in an initialization container, carry an ID of the initialization container in a service acquisition fragment of an ESG, send the ESG and the initialization container, and provide a data type of the initialization data file. The terminal equipment 92 is adapted to acquire the ESG, acquire the initialization container according to the ID thereof, extract the initialization data file from the initialization container, acquire the data type of the initialization data file, and initialize the notification service according to the initialization data file and the data type.

Based on the same inventive idea, a communication system having the same structure as that shown in Figure 9 is also provided in an embodiment of the present invention. In this embodiment, the server 91 is adapted to encapsulate initialization data file of a notification service in an initialization container, carry an ID of the initialization container in a default-notification-access descriptor, send the access descriptor and the initialization container, and provide a data type of the initialization data file. The terminal equipment 92 is adapted to acquire the access descriptor, acquire the initialization container according to the ID thereof, extract the initialization data file from the initialization container, acquire the data type of the initialization data file, and initialize the notification service according to the initialization data file and the data type.

Those of ordinary skill in the art should understand that the above steps can be completely or partially performed through relevant hardware under the instruction of a program stored in a computer readable storage medium. The storage medium includes a ROM, a RAM, a magnetic disk, or an optical disk.

In the embodiment of the present invention, initialization data file of a notification service is encapsulated in an initialization container, an ID of the initialization container is carried in a service acquisition fragment of an ESG, and the ESG and the initialization container are sent, and a data type of the initialization data file is provided. Accordingly, once receiving the ESG and the initialization container, a subsequent terminal equipment acquires the initialization data file and the data type thereof and accordingly initializes the notification service according to the initialization data file and the data type, so as to expand the initialization manner for the notification service. The initialization manner is diversified and not limited to filtering the notification service.

In the embodiment of the present invention, initialization data file of a notification service is encapsulated in an initialization container, an ID of the initialization container is carried in a default-notification-access descriptor, and the access descriptor and the initialization container are sent, and a data type of the initialization data file is provided. Accordingly, once receiving the access descriptor and the initialization container, a subsequent terminal equipment acquires the initialization data file and the data type thereof and accordingly initializes the notification service according to the initialization data file and the data type, so as to expand the initialization manner for the notification service. The initialization manner is diversified and not limited to filtering the notification service. Moreover, the distribution and acquisition of the configuration file required by the notification service are further realized.

It is apparent to those skilled in the art that modifications and variations can be made without departing from the scope of the present invention. Therefore, the modifications and variations described in the appended claims and equivalences thereof fall within the protecting range of the present invention.

## Claims

1. A method for transmitting initialization data file of a notification service, **characterized in**: comprising:
encapsulating initialization data file of a notification service in an initialization container;
carrying an identifier (ID) of the initialization container in a service acquisition fragment of an electronic service guide (ESG) or in a default-notification-access descriptor; and
sending the ESG or the access descriptor as well as the initialization container, and providing a data type for the initialization data file.

2. The method according to claim 1, wherein the initialization container comprises an index and data; and the providing a data type for the initialization data file comprises:
encapsulating the data type(s) in the index of the initialization container,
or the method further comprises: carrying the data type(s) in the ESG or the access descriptor.

3. The method according to claim 2, wherein the index further comprises one selected from a group consisting of position information of the initialization data file, a content ID of the initialization data file, a content type of the initialization data file, a document ID of an initialization document, a version number of the initialization document, and a content-description of the initialization document, or any combination thereof.

4. The method according to claim 1, wherein the initialization container is sent through an ESG session, a notification service session, or an independent session; or the initialization container is sent through a bootstrap ESG session or a default notification service session.

5. The method according to claim 1, wherein the initialization data file comprises one selected from a group consisting of a filter table of the notification service, a skin table of the notification service, a lifecycle configuration file of the notification service, and a notification message type table, or any combination thereof.

6. A method for initializing a notification service, comprising:
acquiring an electronic service guide (ESG) or a default-notification-access descriptor, carrying an identifier (ID) of an initialization container in a service acquisition fragment of the ESG or the access descriptor;
acquiring the initialization container according to the ID;
extracting initialization data file of the notification service from the initialization container;
acquiring a data type for the initialization data file; and
initializing the notification application according to the initialization data file(s) and the data type(s).

7. The method according to claim 6, wherein the initialization data file is a filter table of the notification service, and the initializing the corresponding notification application according to the initialization data file and the data type comprises: acquiring the filter table and setting a value of a filter parameter according to the filter table; or
the initialization data file is a skin table of the notification service, and the initializing the corresponding notification application according to the initialization data file and the data type comprises: acquiring the skin table and setting a presenting manner according to the skin table; or
the initialization data file is a lifecycle configuration file of the notification service, and the initializing the corresponding notification application according to the initialization data file and the data type comprises: acquiring the lifecycle configuration file and setting at least one lifecycle parameter of the notification service according to the lifecycle configuration file; or
the initialization data file is a notification message type table, and the initializing the corresponding notification application according to the initialization data file and the data type comprises: acquiring the notification message type table and selectively setting at least one value of the notification message type.

8. A communication device, comprising:
an initialization container processing module, adapted to encapsulate initialization data file of a notification service in an initialization container;
an electronic service guide (ESG) processing module, adapted to carry an identifier of the initialization container in a service acquisition fragment of the ESG or in a default-notification-access descriptor; and
a sending module, adapted to send the ESG or the access descriptor as well as the initialization container, and provide a data type of the initialization data file.

9. The device according to claim 8, wherein the initialization container comprises an index and data;
and the initialization container processing module is further adapted to encapsulate the data type in the index of the initialization container, or the initialization container processing module is further adapted to carry the data type in the ESG or the access descriptor.

10. A communication device, comprising:
a first acquisition module, adapted to acquire an electronic service guide (ESG) or a default-notification-access descriptor, wherein a service acquisition fragment of the ESG or the access descriptor carries an identifier (ID) of an initialization container;
a second acquisition module, adapted to acquire the initialization container according to the ID;
an extraction module, adapted to extract initialization data file of a notification service from the initialization container;
a third acquisition module, adapted to acquire a data type of the initialization data file; and
an initialization module, adapted to initialize the notification service according to the initialization data file and the data type.

11. The device according to claim 10, wherein the initialization container comprises an index and data; and the data type is encapsulated in the index, or the data type is carried in the ESG or the access descriptor.

12. The device according to claim 10, wherein the second acquisition module is further adapted to acquire the initialization container through an ESG session, a notification service session, or an independent session; or the second acquisition module is further adapted to acquire the initialization container through a bootstrap ESG flow or a default notification service session.

13. The device according to claim 10, wherein the initialization data file is a filter table of the notification service, and the initialization module is further adapted to acquire the filter table and sets a value of a filter parameter according to the filter table; or
the initialization data file is a skin table of the notification service, and the initialization module is further adapted to acquire skin table and sets a presenting manner according to the skin table; or
the initialization data file is a lifecycle configuration file of the notification service, and the initialization module is further adapted to acquire the lifecycle configuration file and sets a lifecycle parameter of the notification service according to the lifecycle configuration file; or
the initialization data file is a notification message type table, and the initialization module is further adapted to acquire the notification message type table and selectively sets a value of the notification message type.

14. A communication system, comprising:
a server, adapted to encapsulate initialization data file of a notification service in an initialization container; carry an identifier (ID) of the initialization container in a service acquisition fragment of an electronic service guide (ESG) or in a default-notification-access descriptor; send the ESG or the access descriptor as well as the initialization container, and provide a data type of the initialization data file; and
a terminal equipment, adapted to acquire the ESG or the access descriptor; acquire the initialization container according to the ID; extract the initialization data file from the initialization container; acquire the data type of the initialization data file; and initialize the notification service according to the initialization data file and the data type.

15. A computer program product, **characterized in**, comprising computer program code, which, when executed by a computer unit, will cause the computer unit to perform all the processes of claim 1 to 7.
